# EUROPÄISCHE PATENTANMELDUNG

(11) **EP 4 316 736 A1**
(43) Veröffentlichungstag der Anmeldung: **07.02.2024**
(21) Anmeldenummer: 22188046.1
(22) Anmeldetag: 01.08.2022
(51) Int. Cl.: B25F 5/00, B25F 5/02, B23B 49/00

(54) **VERFAHREN ZUM STEUERN UND REGELN EINER WERKZEUGMASCHINE UND ERFASSUNGSVORRINGUNG SOWIE SYSTEM ZUR DURCHFÜHRUNG DES VERFAHRENS**

(71) Anmelder: Hilti Aktiengesellschaft, 9494 Schaan (LI)
(72) Erfinder: Mahajan, Suyog Pradip, 80805 München (DE); Hurka, Florian, 86459 Margertshausen (DE)
(74) Vertreter: Hilti Aktiengesellschaft Corporate Intellectual Property

(57) **Zusammenfassung**

Verfahren zum Steuern und Regeln einer Werkzeugmaschine, wobei die Werkzeugmaschine mit wenigstens einer Erfassungsvorrichtung verbunden ist, enthaltend die Verfahrensschritte:
- Erfassen eines ersten Distanzwertes durch wenigstens einen Sensor der Erfassungsvorrichtung;
- Eingeben wenigstens eines Wegstreckenwertes in Erfassungsvorrichtung durch eine Eingabeeinrichtung;
- Einstellen der Werkzeugmaschine von einem ersten Betriebsmodus mit wenigstens einem ersten Betriebskennwert in einen zweiten Betriebsmodus mit wenigstens einem zweiten Betriebskennwert;
- Erfassen wenigstens eines zweiten Distanzwertes in einer vorbestimmten Zeitdauer;
- Senden wenigstens eines Signals von der Erfassungsvorrichtung an die Werkzeugmaschine in Abhängigkeit zu dem erfassten wenigstens zweiten Distanzwert; und
- Einstellen der Werkzeugmaschine von dem zweiten Betriebsmodus in einen dritten Betriebsmodus mit wenigstens einem dritten Betriebskennwert nach Empfangen eines vorbestimmten Signals.

Des Weiteren betrifft die vorliegende Erfindung eine Erfassungsvorrichtung zur Durchführung des Verfahrens.

Darüber hinaus betrifft die vorliegende Erfindung System enthaltend eine Werkzeugmaschine und eine Erfassungsvorrichtung zur Durchführung des Verfahrens.

## Beschreibung

Die vorliegende Erfindung betrifft ein Verfahren zum Steuern und Regeln einer Werkzeugmaschine, wobei die Werkzeugmaschine mit wenigstens einer Erfassungsvorrichtung verbunden ist.

Des Weiteren betrifft die vorliegende Erfindung eine Erfassungsvorrichtung zur Durchführung des Verfahrens.

Darüber hinaus betrifft die vorliegende Erfindung System enthaltend eine Werkzeugmaschine und eine Erfassungsvorrichtung zur Durchführung des Verfahrens.

Werkzeugmaschinen in Form von Bohrgeräten (d.h. Bohrhämmer, Bohrmaschinen oder Kernbohrgeräte) zum Erzeugen von zylindrischen Bohrlöchern sind durch den Stand der Technik weitestgehend bekannt. Beim Erzeugen eines Bohrlochs ist neben dem korrekten Durchmesser auch die tatsächliche Bohrlochtiefe von hoher Bedeutung.

Zum Messen bzw. Erfassen der aktuellen Bohrlochtiefe gibt es ebenfalls gemäß dem Stand der Technik zahlreiche Vorrichtungen unterschiedlicher Ausführungen mit verschiedenen Funktionsweisen. Diese bereits vorhandenen Vorrichtungen sind jedoch ungenau und daher problematisch in der Handhabung.

Es ist damit Aufgabe der vorliegenden Erfindung das vorstehend beschriebene Problem zu lösen.

Die Aufgabe wird gelöst durch den Gegenstand des unabhängigen Patentanspruchs 1, 9 und 12. Vorteilhafte Ausführungsformen des erfindungsgemäßen Gegenstands sind in den jeweiligen abhängigen Patentansprüchen enthalten.

Die Aufgabe wird insbesondere gelöst durch ein Verfahren zum Steuern und Regeln einer Werkzeugmaschine, wobei die Werkzeugmaschine mit wenigstens einer Erfassungsvorrichtung verbunden ist.

Erfindungsgemäß sind die folgenden Verfahrensschritte vorgesehen
- Erfassen eines ersten Distanzwertes durch wenigstens einen Sensor der Erfassungsvorrichtung;
- Eingeben wenigstens eines Wegstreckenwertes in die Erfassungsvorrichtung durch eine Eingabeeinrichtung;
- Einstellen der Werkzeugmaschine von einem ersten Betriebsmodus mit wenigstens einem ersten Betriebskennwert in einen zweiten Betriebsmodus mit wenigstens einem zweiten Betriebskennwert;
- Erfassen wenigstens eines zweiten Distanzwertes in einer vorbestimmten Zeitdauer;
- Senden wenigstens eines Signals von der Erfassungsvorrichtung an die Werkzeugmaschine in Abhängigkeit zu dem erfassten wenigstens zweiten Distanzwert; und
- Einstellen der Werkzeugmaschine von dem zweiten Betriebsmodus in einen dritten Betriebsmodus mit wenigstens einem dritten Betriebskennwert nach Empfangen eines vorbestimmten Signals.

Der wenigstens eine Sensor der Erfassungsvorrichtung kann auf einer Laufzeitmessung, z.B. einer Ultraschallmessung, basieren.

Es ist insbesondere möglich, dass wenigstens eine ersten und zweite Erfassungsvorrichtung enthalten sind, wobei die wenigstens erste Erfassungsvorrichtung einen ersten Distanzwert und die wenigstens zweite Erfassungsvorrichtung einen zweiten Distanzwert zu derselben Zeit erfassen kann. Zu Beginn des Bohrbohrgangs müssen der ersten und zweite Distanzwert nicht identisch sein. Das Erfassen wenigstens eines ersten und zweiten Distanzwertes dient zum Erfassen einer Raumlage der Werkzeugmaschine in Bezug auf das bearbeitende Werkstück. Je mehr Erfassungsvorrichtungen an unterschiedlichen Position des Gehäuses der Werkzeugmaschine vorgesehen sind, desto genauer ist die Bestimmung der Raumlage der Werkzeugmaschine. Wenn bei einem kontinuierlichen Erfassen von Distanzwerten durch die erste und zweite Erfassungsvorrichtung während des Bohrvorgangs ein vorbestimmter Differenzwert zwischen den erfassten Distanzwerten der ersten Erfassungsvorrichtung zu den erfassten Distanzwerten der zweiten Erfassungsvorrichtung mit Hilfe der Steuereinrichtung der Werkzeugmaschine ermittelt wird, kann die Werkzeugmaschine von einem ersten Betriebsmodus mit wenigstens einem ersten Betriebskennwert in einen zweiten Betriebsmodus mit wenigstens einem zweiten Betriebskennwert eingestellt werden. Hierdurch kann eine schiefe, d.h. nicht orthogonale, Ausrichtung der Werkzeugmaschine zu einem bearbeitenden Werkstück verhindert werden.

Gemäß einer alternativen Ausführungsform kann es möglich sein, dass das Einstellen der Werkzeugmaschine von dem ersten Betriebsmodus mit wenigstens dem ersten Betriebskennwert in den zweiten Betriebsmodus mit wenigstens dem zweiten Betriebskennwert in Abhängigkeit wenigstens eines Kennwertes eines zu bearbeitenden Werkstoffs erfolgt. Bei dem ersten Betriebsmodus kann es sich dabei um einen Aktivierungszustand der Werkzeugmaschine handeln. Der erste Betriebskennwert kann ein erster Drehzahlwert des Antriebs (z.B. Motor) sein. Bei dem zweiten Betriebsmodus kann es sich entweder auch um einen Aktivierungszustand oder aber um einen Deaktivierungszustand der Werkzeugmaschine handeln. Der zweite Betriebskennwert kann ein zweiter Drehzahlwert des Antriebs sein, der entweder geringer oder größer als der erste Drehzahlwert ist. Der zweite Drehzahlwert kann auch Null betragen, sodass kein Drehmoment von dem Antrieb erzeugt wird.

Entsprechend einer vorteilhaften Ausführungsform kann es möglich sein, dass das Einstellen der Werkzeugmaschine von dem ersten Betriebsmodus mit wenigstens dem ersten Betriebskennwert in den zweiten Betriebsmodus mit wenigstens dem zweiten Betriebskennwert in Abhängigkeit der Länge der Wegstrecke erfolgt. So ist es möglich, dass die Drehzahl auf null reduziert wird, wenn eine bestimmte Bohrtiefe (d.h. Wegstrecke) erreicht wurde.

Der erste und/oder zweite Betriebskennwert kann dabei eine Drehzahl oder Drehmoment sein.

Gemäß einer weiteren vorteilhaften Ausführungsform kann es möglich sein, dass das Einstellen der Werkzeugmaschine von dem ersten Betriebsmodus mit wenigstens dem ersten Betriebskennwert in den zweiten Betriebsmodus mit wenigstens dem zweiten Betriebskennwert in Abhängigkeit eines Durchmessers eines von der Werkzeugmaschine zu erzeugenden Bohrlochs erfolgt. Hierdurch kann auf einfache Art und Weise eine maximale Drehzahl für den Antrieb für einen Durchmesser einer Bohrkrone oder für einen Bohrer festgelegt werden bzw. die Drehzahl für den Antrieb begrenzt werden.

Entsprechend einer weiteren vorteilhaften Ausführungsform kann es möglich sein, dass das Senden des wenigstens eines Signals von der Erfassungsvorrichtung an die Werkzeugmaschine in Abhängigkeit zu dem erfassten wenigstens zweiten Distanzwert entweder unmittelbar von der Erfassungsvorrichtung an die Werkzeugmaschine oder mittels einer externen Vorrichtung erfolgt. Hierdurch kann einem Anwender eine bestimmte Bohrtiefe angezeigt werden. Die Drehzahl des Antriebs kann gleichbleiben, sich erhöhen oder reduziert werden.

Die externe Vorrichtung kann in Form eines Smartphones, eines Tablets oder einer Smartwatch ausgestaltet sein.

Gemäß einer weiteren vorteilhaften Ausführungsform kann es möglich sein, dass der dritte Betriebsmodus einem Deaktivierungszustand der Werkzeugmaschine entspricht. Bei dem dritte Betriebsmodus kann der Drehzahlwert und/oder der Drehmomentwert gleich null sein.

Entsprechend einer weiteren vorteilhaften Ausführungsform kann es möglich sein, dass in dem ersten und/oder zweiten Betriebsmodus ein Werkzeug der Werkzeugmaschine in eine erste Drehrichtung und in dem dritten Betriebsmodus in einer zweiten Drehrichtung betrieben wird. Hierdurch kann ein Entfernen eines Bohrwerkzeugs (z.B. Bohrkrone) aus einem Bohrloch nach Erreichen einer bestimmten Bohrtiefe erleichtert werden.

Gemäß einer weiteren vorteilhaften Ausführungsform kann es möglich sein, dass es sich bei den Betriebskennwerten der Werkzeugmaschine um einen Drehzahlwert oder Drehmomentwert handeln kann.

Des Weiteren wird die Aufgabe gelöst durch eine Erfassungsvorrichtung zur Durchführung des Verfahrens.

Erfindungsgemäß ist vorgesehen, dass wenigstens ein Sensor, eine Steuereinrichtung, eine Schnittstelleneinrichtung und eine Kommunikationseinrichtung enthalten ist.

Gemäß einer vorteilhaften Ausführungsform kann es möglich sein, dass wenigstens ein Sensor, eine Steuereinrichtung, eine Schnittstelleneinrichtung und eine Kommunikationseinrichtung enthalten ist.

Die Schnittstelleneinrichtung kann dabei in Form einer geeigneten form- und/oder kraftschlüssigen Verbindung ausgestaltete sein, um eine feste oder wiederlösbare Verbindung der Erfassungsvorrichtung mit der Werkzeugmaschine herzustellen.

Die Kommunikationseinrichtung kann dabei auf Basis einer drahtlosen und/oder drahtgebundenen Datenübertragungstechnologie basieren.

Entsprechend einer weiteren vorteilhaften Ausführungsform kann es möglich sein, dass die Erfassungsvorrichtung wiederlösbar mit der Werkzeugmaschine verbindbar ist.

Gemäß einer alternativen vorteilhaften Ausführungsform kann es möglich sein, dass die Erfassungsvorrichtung fest mit der Werkzeugmaschine verbunden ist.

Darüber hinaus wird die Aufgabe gelöst durch ein System enthaltend eine Werkzeugmaschine und eine Erfassungsvorrichtung zur Durchführung des Verfahrens.

Erfindungsgemäß ist vorgesehen, dass die Werkzeugmaschine wenigstens eine Werkzeugmaschinenschnittstelle und die Erfassungsvorrichtung wenigstens eine Erfassungsvorrichtungsschnittstelle enthält, wobei die Werkzeugmaschinenschnittstelle sowie die Erfassungsvorrichtungsschnittstelle fest oder wiederlösbar miteinander verbindbar sind.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Seitenansicht auf eine Werkzeugmaschine gemäß einer ersten Ausführungsform und eine mit der Werkzeugmaschine verbundenen Erfassungsvorrichtung gemäß einer ersten Ausführungsform zu Beginn eines Bohrvorhangs an einem Werkstück;
- Figur 2: eine Seitenansicht auf die Werkzeugmaschine verbundenen Erfassungsvorrichtung während oder am Ende eines Bohrvorgangs an dem Werkstück;

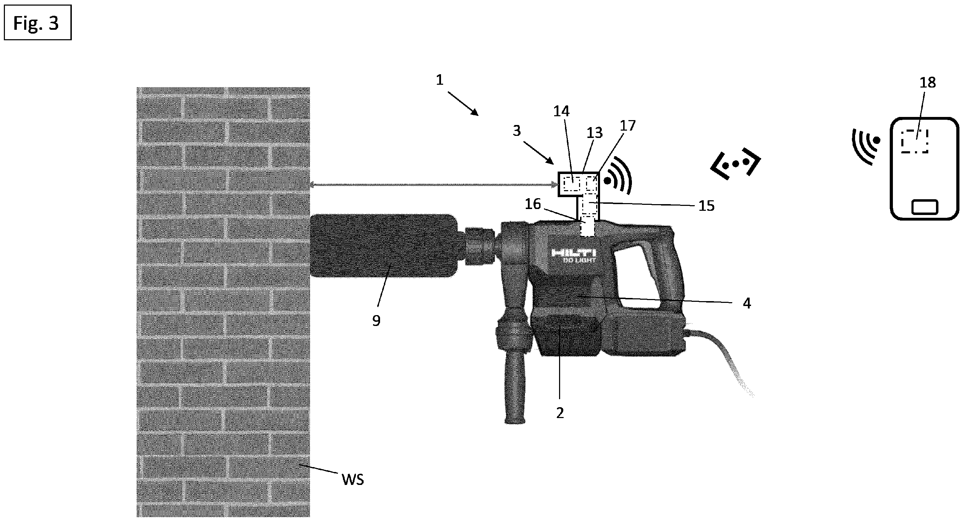

- Figur 3: eine weitere Seitenansicht auf die Werkzeugmaschine und die Erfassungsvorrichtung gemäß der ersten Ausführungsform zusammen mit einer Vorrichtung;
- Figur 4: eine weitere Seitenansicht auf die Werkzeugmaschine und die Erfassungsvorrichtung gemäß einer zweiten Ausführungsform; und
- Figur 5: eine weitere Seitenansicht auf die Werkzeugmaschine mit einer ersten und zweiten Erfassungsvorrichtung.

### Ausführungsbeispiele:

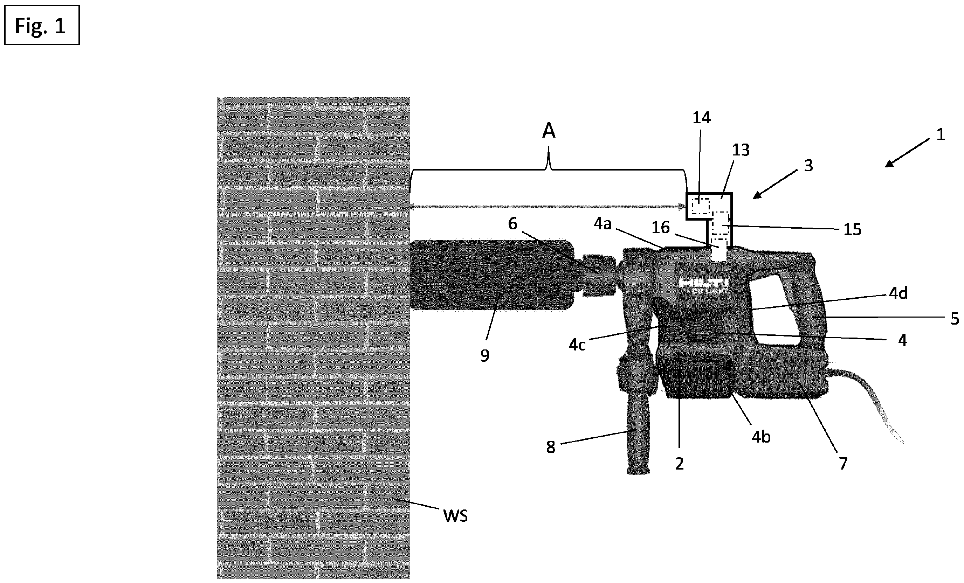

Figur 1 zeigt ein erfindungsgemäßes System 1 aus einer Werkzeugmaschine 2 und einer erfindungsgemäßen Erfassungsvorrichtung 3.

Die Werkzeugmaschine 2 ist in Form eines Bohrhammers ausgestaltet.

Gemäß einer alternativen und in den Figuren nicht gezeigten Ausführungsform kann die Werkzeugmaschine 2 auch in Form einer Bohrmaschine und eines Kernbohrgeräts ausgestaltet sein.

Die Werkzeugmaschine 2 gemäß einer ersten Ausführungsform enthält im Wesentlichen ein Gehäuse 4, einen Handgriff 5, eine Werkzeugaufnahme 6 und eine Energieversorgung 7.

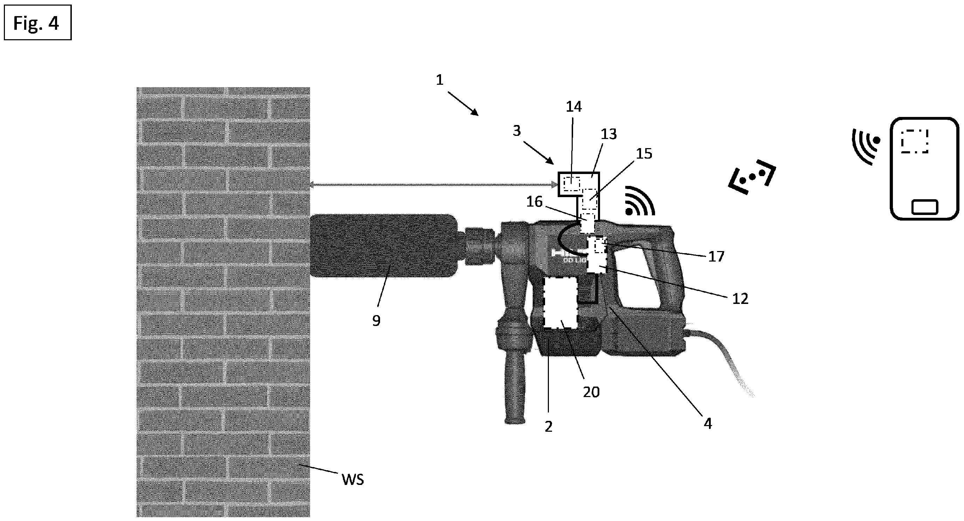

Das Gehäuse 4 weist eine Oberseite 4a, eine Unterseite 4b, ein vorderes Ende 4c und hinteres Ende 4d. Im Inneren des Gehäuses 4 ist ein Antrieb 20, eine Getriebevorrichtung, eine Steuervorrichtung 12 und Antriebswelle. Die Steuervorrichtung 12 dient zum Steuern und Regeln der einzelnen Funktionen der Werkzeugmaschine 2 und ist in Figur 4 angedeutet.

Der Handgriff 5 ist an dem hinteren Ende 4d des Gehäuses 4 der Werkzeugmaschine 2 positioniert und dient zum Halten sowie Führen der Werkzeugmaschine 2. Ein Zusatzhandgriff 8 zum zusätzlichen Halten und Führen der Werkzeugmaschine 2 ist noch am vorderen Ende des Gehäuses 4c der Werkzeugmaschine 2 positioniert.

Der Antrieb 20 ist in Form eines bürstenlosen Elektromotors ausgestaltete und dient zum Erzeugen eines Drehmoments. Der Antrieb 20 ist mit der Steuervorrichtung 12 verbunden, sodass die Steuervorrichtung 12 Funktionen des Antriebs 20, wie z.B. die Drehzahl und/oder das Drehmoment, regeln kann.

Des Weiteren ist der Antrieb 20, die Getriebevorrichtung, die Steuervorrichtung 12 und die Antriebswelle so im Inneren des Gehäuses 4 und zueinander angeordnet, dass das von dem Antrieb 20 erzeugte Drehmoment auf die Getriebevorrichtung und die Antriebswelle übertragen werden kann. Die Werkzeugaufnahme 6 ist an der Oberseite 4a des Gehäuses 4 positioniert und zu der Antriebswelle angeordnet, dass das Drehmoment von dem Antriebswelle auf die Werkzeugaufnahme 6 übertragen wird. Die Werkzeugaufnahme 6 dient zum Aufnehmen und Halten eines Werkzeugs 9. Das Werkzeug 9 ist in den Figuren in Form einer Bohrkrone ausgestaltet.

Der Getriebevorrichtung und die Antriebswelle sind in den Figuren nicht gezeigt.

Die Energieversorgung 7 dient zum Versorgen der Werkzeugmaschine 2, insbesondere der Verbraucher der Werkzeugmaschine 2, mit elektrischer Energie und ist in Form eines Netzanschluss ausgestaltet. Gemäß einer alternativen und in den Figuren nicht gezeigten Ausführungsform kann die Energieversorgung auch in Form eines Akkumulators oder mehrerer Akkumulatoren ausgestaltet sein.

Wie insbesondere in Figur 4 ersichtlich kann die Werkzeugmaschine 2 gemäß einer zweiten Ausführungsform auch eine Kommunikationseinrichtung 10 enthalten, die ebenfalls im Inneren des Gehäuses 4 der Werkzeugmaschine 2 positioniert und mit der Steuerungsvorrichtung 12 über eine entsprechende Leitung verbunden ist. Durch die Verbindung der Steuerungsvorrichtung 12 mit der Kommunikationseinrichtung 10 der Werkzeugmaschine 2 können Daten und Werte in Form von Signalen von der Werkzeugmaschine 2 ausgesandt werden. Die Kommunikationseinrichtung 10 der Werkzeugmaschine 2 ist ebenso zum Senden und Empfangen von Daten in Form von Signalen mit einer externer Vorrichtung 19 ausgestaltet. Die Kommunikationseinrichtung 10 der Werkzeugmaschine 2 ist in dem vorliegenden Ausführungsbeispiel auf einer Bluetooth-Technologie ausgestaltet.

Alternativ kann die Kommunikationseinrichtung 10 auch auf Basis einer WiFi, NFC (Near Field Communication) oder einer anderen geeigneten drahtlosen Datenübertragungstechnologie basieren.

Des Weiteren kann die Kommunikationseinrichtung 10 auch auf einer drahtgebundenen Datenübertragungstechnologie basieren.

Die Erfassungsvorrichtung 3 enthält im Wesentlichen ein Gehäuse 13, einen Sensor 14, eine Steuereinrichtung 15, eine Schnittstelleneinrichtung 16, eine Eingabeeinrichtung und eine Kommunikationseinrichtung 17. Der Sensor 14, die Steuereinrichtung 15 und die Kommunikationseinrichtung 17 sind im Inneren des Gehäuses 13 der Erfassungsvorrichtung 3 positioniert. Die Schnittstelleneinrichtung 16 ist an einer Unterseite des Gehäuses der Erfassungsvorrichtung 3 angeordnet.

Der Sensor 14 ist in dem vorliegenden Ausführungsbeispiel in Form eines Ultraschallsensors ausgestaltet und dient zum Messen oder Erfassen von Distanzwerten. Der Distanzwert kann auch als Wegstrecke, Abstand oder Strecke bezeichnet werden. Alternativ kann die Erfassungsvorrichtung 3 auch mehr als einen Sensor 14 enthalten. In dem Fall, dass mehrere Sensoren 14 in der Erfassungsvorrichtung 3 enthalten sind, können die Sensoren 14 alle dieselbe Art von Sensoren oder aber auch unterschiedliche Arten von Sensoren sein.

Die Steuereinrichtung 15 dient zum Steuern und Regeln der Funktionen der Erfassungsvorrichtung 3 und ist über eine entsprechende Leitung mit dem Sensor 14 verbunden. So ist die Steuereinrichtung 15 insbesondere so ausgestaltet, dass Daten in Form von Signalen von dem Sensor 14 erfasst und verarbeitet werden können.

Die Kommunikationseinrichtung 17 der Erfassungsvorrichtung 3 ist mit der Steuereinrichtung 15 verbunden und dient zum Senden und Empfangen von Daten in Form von Signalen. Mit Hilfe der Kommunikationseinrichtung 17 kann die Erfassungsvorrichtung 3 mit einer externen Vorrichtung 19 kommunizieren, d.h. Daten und Werte in Form von Signalen austauschen. Bei der externen Vorrichtung 19 kann es sich um die Werkzeugmaschine 2, eine weitere Werkzeugmaschine, ein Staubsauger, eine Wasserversorgung oder ein Smartphone handeln.

In dem vorliegenden Ausführungsbeispiel ist die externe Vorrichtung 19 in Form eines Smartphones ausgestaltet. Die Kommunikationseinrichtung 17 der Erfassungsvorrichtung ist in dem vorliegenden Ausführungsbeispiel auf einer Bluetooth-Technologie ausgestaltet. Alternativ kann die Kommunikationseinrichtung 17 auch auf Basis einer WiFi, NFC (Near Field Communication) oder einer anderen geeigneten drahtlosen Datenübertragungstechnologie basieren. Des Weiteren kann die Kommunikationseinrichtung 17 auch auf einer drahtgebundenen Datenübertragungstechnologie basieren.

Die Eingabeeinrichtung dient zum Eingeben von Daten in die Erfassungsvorrichtung 3 und ist als Bedieneingabefeld ausgestaltet. Die Eingabeeinrichtung ist in den Figuren nicht gezeigt. Alternativ kann die Eingabeeinrichtung auch durch die externe Vorrichtung 19 ausgestaltet sein, sodass ein bestimmter Befehl oder Daten in die externe Vorrichtung 19 (z.B. ein Smartphone) eingegeben wird und mit Hilfe der Kommunikationseinrichtung 17 von der Erfassungsvorrichtung 3 empfangen wird. Die externe Vorrichtung 19 weist hierzu ebenfalls eine Kommunikationseinrichtung 18 auf.

Die Schnittstelleneinrichtung 16 dient in dem vorliegenden Ausführungsbeispiel zum wiederlösbaren Verbinden der Erfassungsvorrichtung 3 mit dem Gehäuse 4 der Werkzeugmaschine 2. Hierzu ist die Schnittstelleneinrichtung 16 mit einer Schraubverbindung ausgestaltet. Die Schraubverbindung ist in den Figuren nicht gezeigt.

Alternativ oder zusätzlich kann die Schnittstelleneinrichtung 16 auch in Form einer Schienenvorrichtung, Schnappverbindung oder einer geeigneten form- und/oder kraftschlüssigen Verbindung ausgestaltet sein. Die Schnittstelleneinrichtung 16 enthält insbesondere ein elektrische Verbindung zu der Steuervorrichtung 12 der Werkzeugmaschine 2. Mit Hilfe der elektrische Verbindung können Daten in Form von Signalen zwischen der Steuereinrichtung 15 der Erfassungsvorrichtung 3 und der Steuervorrichtung 12 der Werkzeugmaschine 2 ausgetauscht werden. Über die elektrische Verbindung kann beispielsweise ein Stopp-Signal von der Steuereinrichtung 15 der Erfassungsvorrichtung 3 und der Steuervorrichtung 12 der Werkzeugmaschine 2 ausgesendet werden, wenn ein bestimmter Distanzwert durch den Sensor 14 erfasst wurde, sodass durch die Steuervorrichtung 12 der Antrieb 20 der Werkzeugmaschine 2 gebremst (d.h. verlangsamt) oder gestoppt wird.

Zur Durchführung des erfindungsgemäßen Verfahrens zum Steuern und Regeln einer Werkzeugmaschine 2 wird wie in Figur 1 gezeigt zunächst ein erster Distanzwertes A durch den Sensor 14 der Erfassungsvorrichtung 3 erfasst. Der erfasste erste Distanzwert A entspricht dabei einer initialen Entfernung des Sensors 14 zu einem bearbeitenden Werkstoff WS vor Arbeits- bzw. Bohrbeginn und wird in Form eines Signals an die Steuereinrichtung 15 der Erfassungsvorrichtung 3 gesendet.

Anschließend wird über die in den Figuren nicht gezeigte Eingabeeinrichtung ein Distanzwert in die Erfassungsvorrichtung 3 eingeben. Bei dem Distanzwert kann es sich um eine gewünschte Bohrlochtiefe in den Werkstoff WS handeln, die am Ende des Bohrvorgangs erreicht werden soll. Der Distanzwert wird in die Steuereinrichtung 15 der Erfassungsvorrichtung 3 eingespeist und dort mittels eines Speichers gespeichert. Der Speicher ist in den Figuren nicht gezeigt. Es können mehr als ein Distanzwert in die Steuereinrichtung 15 der Erfassungsvorrichtung 3 eingespeist und in dem Speicher gespeichert werden.

In einem nächsten Verfahrensschritt wird die Werkzeugmaschine 2 von einem ersten Betriebsmodus mit wenigstens einem ersten Betriebskennwert in einen zweiten Betriebsmodus mit wenigstens einem zweiten Betriebskennwert eingestellt. Der Betriebskennwert (auch Betriebsparameter) ist in dem vorliegenden Ausführungsbeispiel eine Drehzahl des als Elektromotor ausgebildeten Antriebs 20. Die erste Drehzahl (d.h. der erste Betriebskennwert) ist geringer als die zweite Drehzahl (d.h. der zweite Betriebskennwert). Die erste Drehzahl kann auch null betragen, sodass sich die Werkzeugmaschine 2 zunächst in einem Deaktivierungszustand befindet.

Des Weiteren wird ein zweiter Distanzwert in einer vorbestimmten Zeitdauer bzw. nach einer gewissen Zeitdauer durch den Sensor 14 erfasst. Bei der Zeitdauer kann es sich um 10 Sekunden handeln. Es ist möglich, dass in Zeitabständen von 2 bis 5 Sekunden ein jeweiliger Distanzwert von dem Sensor 14 erfasst wird. Die Zeitabstände können größer oder auch kleiner als 2 bis 5 Sekunden sein.

Der von dem Sensor 14 erfasste Distanzwert bzw. erfassten Distanzwerte werden von der Erfassungsvorrichtung 3 an die Werkzeugmaschine 2 in Form eines Signals gesendet. Das gesendete Signal steht in Abhängigkeit bzw. in Bezug zu dem jeweils erfassten Distanzwert.

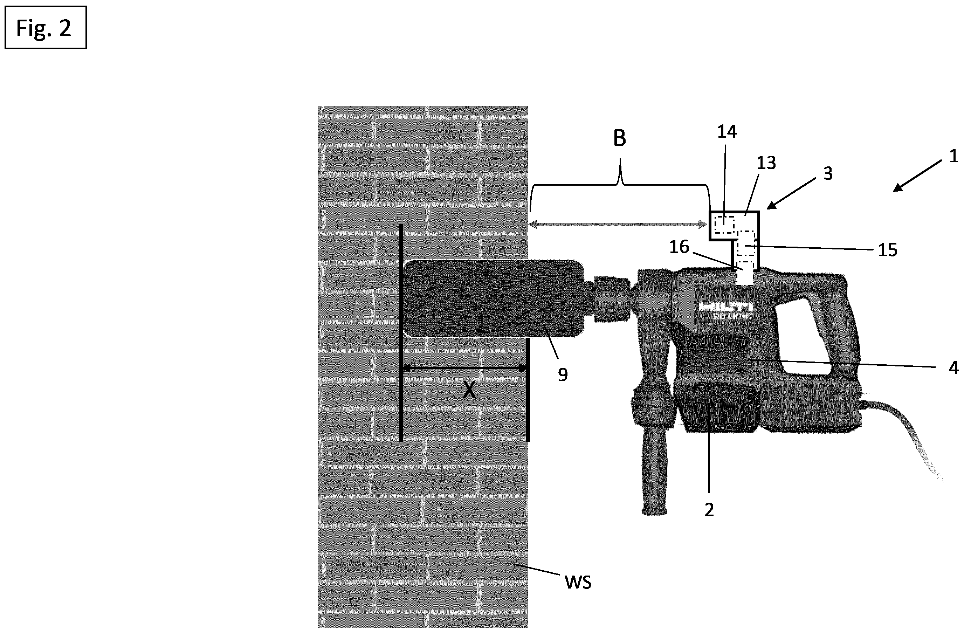

In einem weiteren Verfahrensschritt wird die Werkzeugmaschine 2 von dem zweiten Betriebsmodus in einen dritten Betriebsmodus mit wenigstens einem dritten Betriebskennwert eingestellt, nachdem ein vorbestimmtes Signal von der Kommunikationseinrichtung 10 der Werkzeugmaschine 2 empfangen wurde. Das vorbestimmte Signal entspricht einem vom Sensor erfassten Distanzwert B, der der gewünschten bzw. programmierten Bohrlochtiefe entspricht. Der Bohrvorgang sollte beendet werden, vgl. Figur 2.

Bei der dritten Betriebskennwert handelt es sich um eine Drehzahl, die null entspricht. Mit anderen Worten: der dritte Betriebsmodus der Werkzeugmaschine 2 entspricht einem Deaktivierungszustand, bei dem keine Drehzahl und folglich auch kein Drehmoment mehr von dem Antrieb 20 erzeugt wird. Alternativ kann es sich bei dem dritten Betriebsmodus um einen Zustand handeln, bei dem der Antrieb 20 in eine entgegengesetzte Drehrichtung dreht als im zweiten Betriebsmodus. Hierdurch dreht sich auch das Werkzeug 9 in eine entgegengesetzte Drehrichtung im Vergleich zu dem zweiten Betriebsmodus. Durch die gegenläufige Drehrichtung des Werkzeugs 9 (d.h. des Bohrers) kommt es zu keinem weiteren Bohrvorgang (Materialabtrag) bzw. das Bohrloch wird nicht mehr tiefer. Des Weiteren wird einem Anwender der Werkzeugmaschine 2 durch den Vorgang des Abbremsens des Antriebs 20 und auch des gegenläufigen Drehens des Werkzeugs 9 relativ deutlich angezeigt, dass die gewünschte bzw. einprogrammierte Bohrlochtiefe B erreicht wurde.

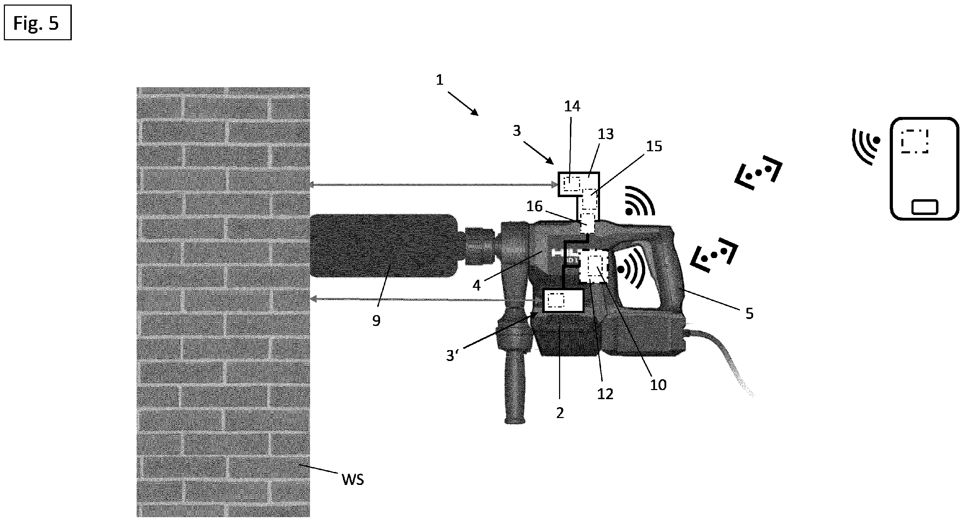

In Figur 5 ist eine weitere Ausführungsform der Werkzeugmaschine 2 mit einem ersten und zweiten Erfassungsvorrichtung 3, 3'. Die beiden Erfassungsvorrichtungen 3, 3' sind dabei im Wesentlichen identisch bzw. baugleich ausgestaltet. Beide Erfassungsvorrichtungen 3, 3' erfassen jeweils einen Distanzwert. Die erste und zweite Erfassungsvorrichtungen 3, 3' stehen miteinander sowie jeweils mit der Steuerungseinrichtung 12 der Werkzeugmaschine 2 in Verbindung, sodass Daten und Werte in Form von Signalen zwischen den beiden Erfassungsvorrichtungen 3, 3' sowie von jeder Erfassungsvorrichtung 3 an die Steuerungseinrichtung 12 der Werkzeugmaschine 2 gesendet und empfangen werden können. Durch das gleichzeitige Erfassen von ersten Distanzwerten durch die erste Erfassungsvorrichtung 3 und zweiten Distanzwerten durch die zweite Erfassungsvorrichtung 3' kann die Raumlage, d.h. die Lage der Werkzeugmaschine 2 zu dem zu bearbeitenden Werkstück WS ermittelt werden. Bei einer Abweichung um einen vorbestimmten Schwellwert (z.B. mehr als 5° in eine x-, y- oder z-Achse) kann die Steuerungseinrichtung 12 der Werkzeugmaschine 2 den Antrieb 20 stoppen oder ein entsprechendes Warnsignal über eine (in den Figuren nicht gezeigte) Ausgabeeinrichtung an der Werkzeugmaschine 2 oder an die externe Vorrichtung 19 aussenden.

### Bezugszeichen

- 1: System
- 2: Werkzeugmaschine
- 3, 3': Erfassungsvorrichtung
- 4: Gehäuse der Werkzeugmaschine
- 4a: Oberseite des Gehäuses der Werkzeugmaschine
- 4b: Unterseite des Gehäuses der Werkzeugmaschine
- 4c: vorderes Ende des Gehäuses der Werkzeugmaschine
- 4d: hinteres Ende des Gehäuses der Werkzeugmaschine
- 5: Handgriff
- 6: Werkzeugaufnahme
- 7: Energieversorgung
- 8: Zusatzhandgriff
- 9: Werkzeug
- 10: Kommunikationseinrichtung der Werkzeugmaschine
- 12: Steuereinrichtung der Werkzeugmaschine
- 13: Gehäuse der Erfassungsvorrichtung
- 14: Sensor der Erfassungsvorrichtung
- 15: Steuereinrichtung der Erfassungsvorrichtung
- 16: Schnittstelleneinrichtung der Erfassungsvorrichtung
- 17: Kommunikationseinrichtung der Erfassungsvorrichtung
- 18: Kommunikationseinrichtung der externen Vorrichtung
- 19: externe Vorrichtung
- 20: Antrieb
- WS: Werkstoff

## Patentansprüche

1. Verfahren zum Steuern und Regeln einer Werkzeugmaschine (2), wobei die Werkzeugmaschine (2) mit wenigstens einer Erfassungsvorrichtung (3, 3') verbunden ist,
**gekennzeichnet durch** die folgenden Verfahrensschritte
- Erfassen eines ersten Distanzwertes durch wenigstens einen Sensor (14) der Erfassungsvorrichtung (3, 3');
- Eingeben wenigstens eines Wegstreckenwertes in die Erfassungsvorrichtung (3, 3') durch eine Eingabeeinrichtung;
- Einstellen der Werkzeugmaschine (2) von einem ersten Betriebsmodus mit wenigstens einem ersten Betriebskennwert in einen zweiten Betriebsmodus mit wenigstens einem zweiten Betriebskennwert;
- Erfassen wenigstens eines zweiten Distanzwertes in einer vorbestimmten Zeitdauer;
- Senden wenigstens eines Signals von der Erfassungsvorrichtung (3, 3') an die Werkzeugmaschine in Abhängigkeit zu dem erfassten wenigstens zweiten Distanzwert; und
- Einstellen der Werkzeugmaschine (2) von dem zweiten Betriebsmodus in einen dritten Betriebsmodus mit wenigstens einem dritten Betriebskennwert nach Empfangen eines vorbestimmten Signals.

2. Verfahren zum Steuern und Regeln einer Werkzeugmaschine (2) nach Anspruch 1,
**dadurch gekennzeichnet, dass** das Einstellen der Werkzeugmaschine (2) von dem ersten Betriebsmodus mit wenigstens dem ersten Betriebskennwert in den zweiten Betriebsmodus mit wenigstens dem zweiten Betriebskennwert in Abhängigkeit wenigstens eines Kennwertes eines zu bearbeitenden Werkstoffs erfolgt.

3. Verfahren zum Steuern und Regeln einer Werkzeugmaschine (2) nach Anspruch 1 oder 2,
**dadurch gekennzeichnet, dass** das Einstellen der Werkzeugmaschine (2) von dem ersten Betriebsmodus mit wenigstens dem ersten Betriebskennwert in den zweiten Betriebsmodus mit wenigstens dem zweiten Betriebskennwert in Abhängigkeit der Länge der Wegstrecke erfolgt.

4. Verfahren zum Steuern und Regeln einer Werkzeugmaschine (2) nach wenigstens einem der Ansprüche 1 bis 3,
**dadurch gekennzeichnet, dass** das Einstellen der Werkzeugmaschine (2) von dem ersten Betriebsmodus mit wenigstens dem ersten Betriebskennwert in den zweiten Betriebsmodus mit wenigstens dem zweiten Betriebskennwert in Abhängigkeit eines Durchmessers eines von der Werkzeugmaschine (9) zu erzeugenden Bohrlochs erfolgt.

5. Verfahren zum Steuern und Regeln einer Werkzeugmaschine (2) nach wenigstens einem der Ansprüche 1 bis 4,
**dadurch gekennzeichnet, dass** das Senden des wenigstens eines Signals von der Erfassungsvorrichtung (3, 3') an die Werkzeugmaschine (2) in Abhängigkeit zu dem erfassten wenigstens zweiten Distanzwert entweder unmittelbar von der Erfassungsvorrichtung (3, 3') an die Werkzeugmaschine (2) oder mittels einer externen Vorrichtung (19) erfolgt.

6. Verfahren zum Steuern und Regeln einer Werkzeugmaschine (2) nach wenigstens einem der Ansprüche 1 bis 5,
**dadurch gekennzeichnet, dass** der dritte Betriebsmodus einem Deaktivierungszustand der Werkzeugmaschine (2) entspricht.

7. Verfahren zum Steuern und Regeln einer Werkzeugmaschine (2) nach wenigstens einem der Ansprüche 1 bis 6,
**dadurch gekennzeichnet, dass** in dem ersten und/oder zweiten Betriebsmodus ein Werkzeug (9) der Werkzeugmaschine (2) in eine erste Drehrichtung und in dem dritten Betriebsmodus in einer zweiten Drehrichtung betrieben wird.

8. Verfahren zum Steuern und Regeln einer Werkzeugmaschine (2) nach wenigstens einem der Ansprüche 1 bis 6,
**dadurch gekennzeichnet, dass** es sich bei den Betriebskennwerten der Werkzeugmaschine (2) um einen Drehzahlwert oder Drehmomentwert handeln kann.

9. Erfassungsvorrichtung () zur Durchführung des Verfahrens nach wenigstens einem der Ansprüche 1 bis 8,
**dadurch gekennzeichnet, dass** wenigstens ein Sensor (14), eine Steuereinrichtung (12), eine Schnittstelleneinrichtung (16) und eine Kommunikationseinrichtung (15) enthalten ist.

10. Erfassungsvorrichtung (3, 3') zur Durchführung des Verfahrens nach Anspruch 9,
**dadurch gekennzeichnet, dass** die Erfassungsvorrichtung (3, 3') wiederlösbar mit der Werkzeugmaschine (2) verbindbar ist.

11. Erfassungsvorrichtung (3, 3') zur Durchführung des Verfahrens nach Anspruch 9,
**dadurch gekennzeichnet, dass** die Erfassungsvorrichtung (3, 3') fest mit der Werkzeugmaschine (2) verbunden ist.

12. System (1) enthaltend eine Werkzeugmaschine (2) und eine Erfassungsvorrichtung (3, 3') zur Durchführung des Verfahrens nach wenigstens einem der Ansprüche 1 bis 8, **dadurch gekennzeichnet, dass** die Werkzeugmaschine (2) wenigstens eine Werkzeugmaschinenschnittstelle und die Erfassungsvorrichtung (3, 3') wenigstens eine Schnittstelleneinrichtung (16) enthält, wobei die Werkzeugmaschinenschnittstelle sowie die Schnittstelleneinrichtung (16) fest oder wiederlösbar miteinander verbindbar sind.
